# EUROPEAN PATENT SPECIFICATION

(11) **EP 0 957 487 B1**
(45) Date of publication and mention of the grant of the patent: **30.06.2010**
(21) Application number: 99109480.6
(22) Date of filing: 12.05.1999
(51) Int. Cl.: G11B 27/10, G11B 27/32, G11B 27/11, G11B 19/02

(54) **Data transmission apparatus and method therefor**
Vorrichtung und Verfahren zur Datenübertragung
Dispositif et méthode de transmission de données

(30) Priority: 13.05.1998 JP 12989098
(43) Date of publication of application: 17.11.1999
(73) Proprietor: Panasonic Corporation, Kadoma-shi Osaka 571-8501 (JP)
(72) Inventor: Kondo, Satoshi, Yawata-shi, Kyoto-fu 614-8361 (JP); Muraki, Kenji, Osaka-shi, Osaka-fu 533-0013 (JP); Yamada, Jiro, Souraku-gun, Kyoto-fu 619-0237 (JP)
(74) Representative: Eisenführ, Speiser & Partner

(56) References cited:
- EP-A- 0 798 723
- EP-A- 0 833 514
- EP-A2- 0 718 845
- WO-A-96/16406
- WO-A-99/06997
- US-A- 5 587 979
- US-A- 5 706 262
- "AV/C Digital Interface Command Set General Specification", Version 3.0 1394 Trade Association, 15 April 1998; available from http://www.1394TA.org XP002111053
- "AV/C Disc Subunit General Specification", Version 1.0 1394 Trade Association, 26 January 1999; available from http://www.1394TA.org XP002111054
- PATENT ABSTRACTS OF JAPAN vol. 097, no. 009, 30 September 1997 (1997-09-30) & JP 09 120666 A (SONY CORP), 6 May 1997 (1997-05-06)
- 'AV/C Digital Interface Command Set General Specification - Version 3.0' 1394 TRADE ASSOCIATION - TA DOCUMENT vol. 1998003, 15 April 1998, XP002111053
- 'AV/C DISC subunit proposal - Version 0.6' 1394 TRADE ASSOCIATION - TA DOCUMENT 16 January 1968, page COMPLETE, XP007904451

## Description

### BACKGROUND OF THE INVENTION

### Field of the Invention

The present invention generally relates to a data transmission system and method therefor having a data transmission apparatus in combination with an external equipment, in particular to a method of storing attributive information in a data format of a list structure and a method of accessing to the listed attributive information from an external equipment. In the data transmission system, auxiliary data recorded on a recording medium such as an optical disk, magnetic tape and the like is sent and received to and from an external equipment via a digital interface defined by such as IEEE 1394 Standard, to thereby process the auxiliary data using a command adapted thereto.

### Description of the Prior Art

Recently, utilization of IEEE 1394 Standard has been increased in a serial data transmission system. The IEEE 1394 system can be used not only for transmission of computer data which is conventionally conducted by a SCSI system or the like, but also used for transmission of substantive audio and/or video (referred to as "AV", hereinafter) data to be processed by an AV equipment. This is because the IEEE 1394 system has two communication methods defined therein, i.e., an isochronous data transmission system and an asynchronous data transmission system.

The isochronous communication is a data transmission method which can be used for transmitting such as substantive AV data requiring a real time property. In this method, a frequency band required for the data transmission is previously obtained prior to the start of the data transmission, and then the data transmission is conducted using the band. By this arrangement, the real time property of the data transmission can be assured.

Meanwhile, the asynchronous communication is a data transmission method for transmitting auxiliary data such as command/response or computer data and the like data which does not require a real time property, using a free time of the isochronous communication. This communication method can be regarded as equivalent to a conventional SCSI method.

Various standards are proposed as a host transmission protocol on the IEEE 1394 system, and an AV protocol is now under standardization as IEC 61883 standard which is used as one of the methods, and a set of AV control commands and responses are defined by IEC 61883 standard. Thus, the IEC 61883 standard specifies such as a method of sending and receiving AV data requiring real time property in an isochronous communication system, and also specifies a method of sending and receiving a control command to be given to an AV equipment in an asynchronous communication system.

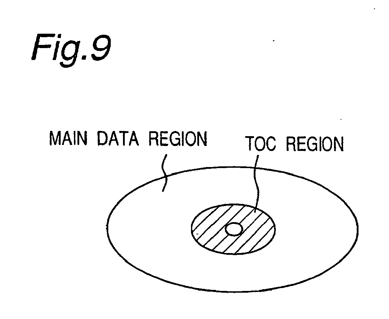

In the case where a compact disk, mini disk or DVD video disk is used as a data recording medium in a disk drive unit for recording and reproducing substantive data such as audio (and/or video) data, the disk is also recorded with auxiliary attributive information as well as the substantive audio (and/or video) data thereon. As shown in Fig. 9, the auxiliary attributive information is recorded in a TOC (Table-Of-Contents) region of a compact disk or in a UTOC region of a mini disk.

In the case of treating audio data such as music data recorded on a disk, the attributive information includes information of start address and end address of the music data, title of music, date/time of recording the music data, and the like information. There is, however, no defined a method of transmitting such attributive information in the serial data transmission by the AV protocol on the IEC 61883 standard. Therefore, in the conventional data transmission system, there are proposed a method of storing attributive information in a data format having a list structure and a method of accessing to the listed attributive information from an external equipment.

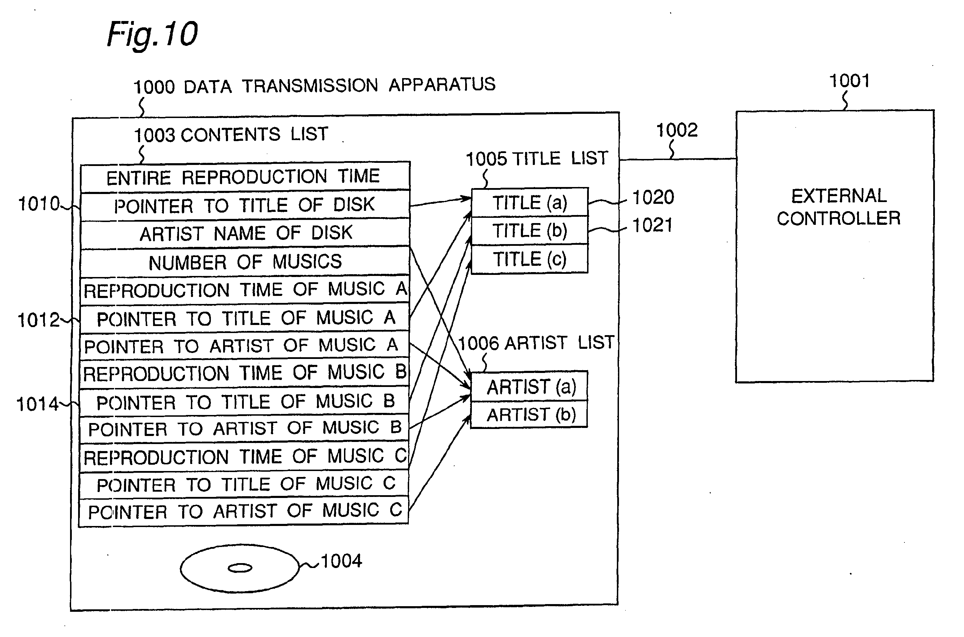

Fig. 10 shows an example of the conventional data transmission system storing and accessing the listed attributive information. In this example, a data transmission apparatus 1000 having, e.g., an optical disk 1004 loaded therein is operatively interconnected to an external equipment 1001 via a digital interface 1002, where the optical disk 1004 is provided with substantive main AV data and auxiliary attributive information data of the AV data recorded thereon. The attributive data includes number of the AV data pieces (which indicates the number of music data pieces when the AV data is music audio data), total reproduction time of the disk, reproduction time of individual AV data, title of the disk, titles of AV data (musics), artist names of the disk and individual AV data, and the like.

When the optical disk 1004 is loaded on the apparatus 1000, the attributive information such as data number of the AV data pieces, total reproduction time, reproduction time of each AV data, titles and artist names and the like data are reproduced and stored in a form of attributive information lists in a register storage portion of the apparatus illustrated as a contents list 1003, a title list 1005 and an artist list 1006. The title list 1005 and artist list 1006 are separately formed for listing the title information separately from the artist name information on the text database because the title information and artist name information are frequently used. Reference to the above text data lists 1005 and 1006 is performed by accessing thereto using pointer information (1010, 1012, 1014 and the like) included in the contents list 1003. An example of referring to the text data lists is shown by arrow lines starting from the contents list 1003 to the respective text data lists.

That is, as shown in Fig. 10, each pointer information is written in the contents list 1003 for accessing to each text data information of the title list 1005 and artist list 1006. For example, as the pointer information 1010 for reference to the title of disk is for accessing to Title a (1020), Title a is designated as the title of disk. Similarly, the title of Music A is also designated as Title a with reference to the pointer information 1012, and the titles of Musics B and C are designated as Title b and Title c, respectively. Moreover, similarly, the artist names of the disk, Music A and Music B are designated by the same Artist a, and the artist name of Music C is designated as Artist b.

In the construction shown in Fig. 10, when a user desires to input a text data content, e.g. a title or artist name of disk in the apparatus 1000, the user firstly accesses to the contents list 1003 from the external controller 1001 via the digital interface 1002 to read the necessary pointer information in the list 1003. With reference to the obtained pointer information, the user accesses to the title list 1005 or artist list 1006 to thereby input the desired text data content. For example, in the case where the title of Music B is rewritten, the user firstly reads the pointer information 1014 in the contents list 1003 for accessing to the title of Music B. According to the pointer information, the user knows that the title of Music B is written as Title b in the second registration region 1021 in the title list 1005. Then, the user writes a desired new title of Music B in the same region (1021) for Title b. In a similar manner, other titles and artist names can be written in the text data lists.

When the optical disk 1004 is ejected from the apparatus 1000, the attributive text data information such as title and artist name information written into the desired region of the lists 1005 and 1006 is recorded in the corresponding region of the optical disk 1004. When the optical disk 1004 is loaded again on an apparatus, new attributive information lists 1003, 1005 and 1006 are produced in the apparatus based on the attributive information recorded on the optical disk 1004. When the attributive text data information such as title data and artist name information recorded in the optical disk 1004 is desired to be obtained by the external equipment, the desired attributive information can be obtained by the external equipment 1001 via the digital interface 1002 by first accessing the corresponding region in the contents list 1003 and then secondly accessing to the title list 1005 or artist list 1006 within the apparatus 1000.

In the conventional system, however, when the text data such as title and artist name information is to be accessed from the external controller 1001, the necessary pointer information should be first read out in the contents list 1003 every operation. As a result, the amount of access process to each list is increased, and thus the data processing ability is undesirably lowered at the time of inputting and outputting the text data such as title and artist name information.

In addition, in the case where a number of AV data pieces recorded on the optical disk 1004 is great or further text information lists are required other than the title and artist lists, the pointer information is increased. Therefore, the amount of information included in the contents list 1003 is increased.

Moreover, in rewriting a title of a AV data piece, in the case where the subject title is commonly referenced to from another AV data piece, if the title of the AV data piece is rewritten, the subject title of the another AV data piece is also changed. For example, in the case where the title of Music A is rewritten in the construction shown in Fig. 10, if Title a (1020) is rewritten, the title of the disk referring to the same Title a is also changed. Therefore, in order to rewrite only the title of Music A without changing the title of Disk, a further region is additionally required to be provided in the title list 1005 for storing a new title of Music A to be written therein. Also, a complicated process is required such that the pointer information 1012 to the old title of Music A should be rewritten in the contents list 1003 in order for referring to the new title.

As described above, the conventional data transmission system has many problems.
"AV/C Digital Interface Command Set General Specification", version 3.0, 1394 Trade Association, 15 April 1998 defines a command set for consumer and professional audio/video equipment over IEEE Std. 1394-1995. The command set makes use of the function controlled protocol (FCP) defined by IEC 61883, digital interface for consumer electronic audio/video equipment, for the transport of audio/video command requests and responses. The audio/video devices are implemented as a common unit architecture within IEEE Std. 1394-1995.

### SUMMARY OF THE INVENTION

The present invention has been developed to solve these problems inherent to the conventional data transmission apparatus, and an essential object of the present invention is to provide an improvement of a data transmission apparatus and method therefor using a specific command adapted thereto, which is capable of accessing to text information stored in a text data list with small access times, minimizing an amount of information stored in a content list, and easily changing the text information.

In order to achieve the objects mentioned above, the present invention provides a data transmission apparatus which sends and receives auxiliary information data relating to main data both recorded on a recording medium, to and from an external equipment via a digital interface to thereby process the auxiliary information data based on command data sent from the external equipment, the apparatus comprises: an auxiliary information storage means for storing the auxiliary information data; and a list development means for developing auxiliary information lists of the auxiliary information data based on the auxiliary information data read out from said auxiliary information storage means, wherein said auxiliary information lists includes a contents list containing attribute contents of the auxiliary information data representing an order in position thereof in the contents list and at least one text data list containing attribute text data pieces corresponding to the attribute contents contained in the contents list, and wherein an order inposition of the attribute text data pieces contained inthe text data list is in the same order in position of theattribute contents contained in the contents list.

In this construction, the auxiliary information lists have specified ID codes, respectively, assigned for reference in accessing thereto, and the specified ID code assigned to the text data list is included in the contents list, which the ID code is represented as pointer information in the contents list.

Another object of the present invention is to provide a data transmission method for sending and receiving auxiliary information data relating to main data both recorded on a recording medium, to and from an external equipment via a digital interface to thereby process the auxiliary information data based on command data sent from the external equipment, the method comprises the steps of: storing the auxiliary information data; and reading and developing auxiliary information lists of the auxiliary information data based on the auxiliary information data, wherein the auxiliary information lists includes a contents list containing attributive contents of the auxiliary information data representing an order in position thereof in the contents list and at least one text data list containing attributive text data pieces corresponding to the attributive contents contained in the contents list, and wherein an order in position of the attributive text data pieces contained in the text data list is in the same order in position of the attributive contents contained in the contents list.

By this arrangement, in the data transmission apparatus and method thereof according to the present invention, when the attributive text data lists are produced, the order in arrangement of the attributive text data in each of the lists is in the same order in arrangement of the contents in the contents list, where the ID codes of the attributive text data lists are written as the pointer information in the contents list. Therefore, once an ID code of an attributive text data list is read out from the contents list, thereafter a desired text data content of the attributive information can be obtained by directly accessing to the corresponding text data list without reading out the contents list again. This is because the order in arrangement of the attributive text data pieces in the attributive text data lists is in the same order in arrangement of the contents written in the contents list. Thus, it is not necessary to read out the contents list every time the attributive text data is read or written, which remarkably reduces the data processing amount.

Accordingly, the auxiliary information list held in the apparatus can be easily obtained by way of the external equipment. Thus, the data processing amount of the apparatus and the external equipment can be reduced together with reduction of the traffic amount on the digital interface.

### BRIEF DESCRIPTION OF THE DRAWINGS

These and other objects and features of the present invention will be readily understood from the following detailed description taken in conjunction with preferred embodiments thereof with reference to the accompanying drawings, in which like parts are designated by like reference numerals and in which:.
Fig. 1 is a block diagram of a data transmission apparatus according to a first embodiment of the present invention;
Fig. 2 is an explanatory diagrams showing a typical construction of attributive information lists of the first embodiment;
Figs. 3A and 3B are explanatory diagrams showing typical command data structures;
Fig. 4 is an explanatory diagram showing an exchange of contents arrangement order in the attributive information lists of the present invention;
Fig. 5 is an explanatory diagram showing a deletion of contents in the attributive information lists of the present invention;
Fig. 6 is an explanatory diagram showing another typical construction of attributive information lists of the present invention;
Fig. 7 is a block diagram of a data transmission apparatus according to a second embodiment of the present invention;
Fig. 8 is an explanatory diagram showing a typical construction of attributive information lists of the second embodiment;
Fig. 9 is a schematic view showing a data recording regions in a disk shaped medium; and
Fig. 10 is an explanatory diagram showing a conventional data transmission construction of attributive information lists.

### DETAILED DESCRIPTION OF THE PREFERRED EMBODIMENTS

Before the detailed description proceeds, it is noted that like parts are designated by like reference numerals throughout the accompanying drawings.

A preferred embodiment of a data transmission apparatus according to the present invention is described below with reference to the accompanying drawings. In the present embodiment, it is noted here that the explanation is made with regard to an example in the case where audio data is treated as an example of substantive main data and the data transmission apparatus is provided with a disk drive unit having an optical disk loaded therein as an example of a data recording medium.

Also, in the preferred embodiment of the present invention, it is noted that the data transmission apparatus employs the AV/C commands and responses defined by IEC 61883 standard.

### (FIRST EMBODIMENT)

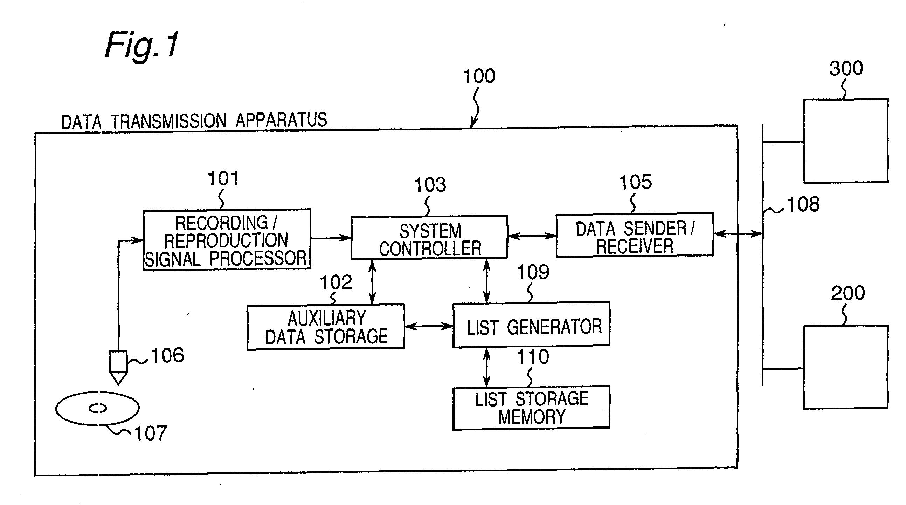

Fig. 1 shows a schematic construction of a data transmission system according to the first embodiment of the present invention, where a data transmission apparatus 100 includes a recording/reproduction signal processor unit 101, an auxiliary data storage device 102 for storing auxiliary data relating to a transaction of main data. The auxiliary data includes management information indicative of attributes of the main data. The apparatus 100 further includes a system controller 103 for controlling the entire parts of the apparatus, and a data sender/receiver unit 105 for sending and receiving various data packets to and from external equipment via a digital interface 108. The apparatus 100 further includes an optical head 106 adapted to an optical disk 107 serving as a recording medium loaded therein, and a list generator unit 109 for producing a list of the auxiliary information data.

The apparatus 100 is interconnected to an external equipment such as an external controller 200 or another data transmission apparatus, personal computer 300 and the like, via the digital interface 108 defined by e.g. IEEE 1394 Standard, so that the auxiliary data transmission is conducted based on a control command between the apparatus 100 and the external equipment.

In a preferred embodiment, a list storage memory device 110 may be provided in the apparatus 100 for temporarily storing and reading contents included in each list, as to be described later in connection with an operation of exchanging an order in arrangement of attributive contents of audio data pieces in each list.

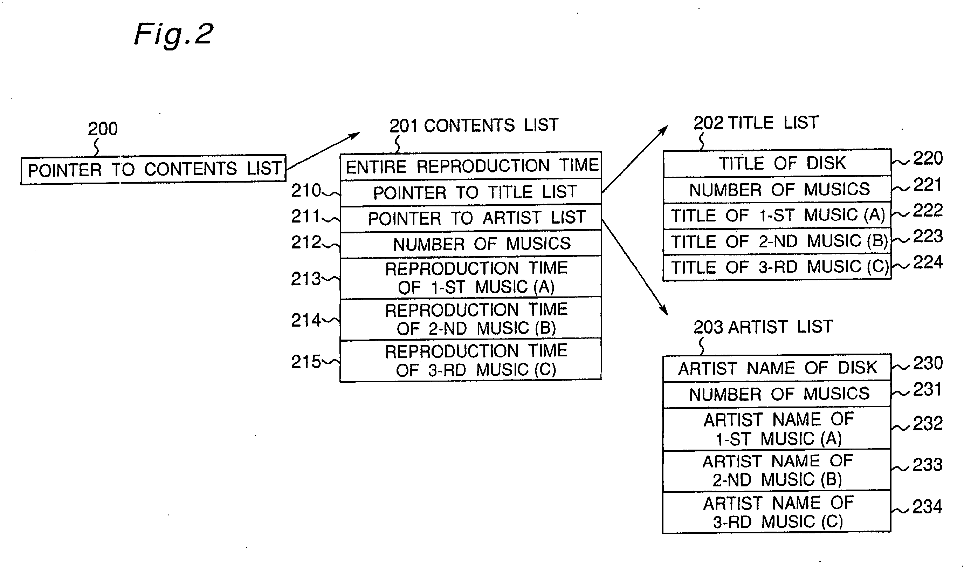

In this construction of the data transmission apparatus 100, the list generator unit 109 develops auxiliary information lists (201, 202, 203 shown in Fig. 2) by reversible conversion from the auxiliary information data stored in the auxiliary data storage device 102, and also the auxiliary information lists are reversibly converted to the auxiliary information data to be stored in the auxiliary data storage device 102. The auxiliary information lists include a contents list (201) showing an arrangement of attributive contents of the auxiliary information, and text data lists (202, 203) each showing an arrangement of attributive text data pieces of specified contents of the auxiliary information data included in the contents list. In this construction, the order of the attributive text data pieces arranged in each of the text data lists (202, 203) is in the same order of the corresponding contents arranged in the contents list (201).

In each of the auxiliary information lists (201, 202, 203), a predetermined ID code is assigned to each list for reference in accessing thereto, and the specified ID codes assigned to the text data lists (202, 203) are included in the contents list (201), which the ID codes are represented as pointer information (210, 211) in the contents list.

The operation of the data transmission apparatus thus constructed is described below. In this embodiment, the explanation is made with regard to an example in the case where audio data such as music pieces is recorded on the optical disk 107 as an example of the substantive main data and the attributive information of the audio data is also recorded on the optical disk 107 as an example of the auxiliary management data.

In the construction shown in Fig. 1, when the optical disk 107 is loaded on the apparatus 100, the attributive information data recorded on the TOC region of the optical disk is reproduced through the optical head 106. The reproduced attributive information data is processed for demodulation and ECC (Error Correction Code) decoding by the recording/reproduction signal processor unit 101 and the resultant processed data is inputted to the system controller 103. Then the attributive information data inputted to the system controller 103 is applied to the attribute storage portion of the auxiliary data storage device 102 and held therein. The attributive information data to be stored in the attribute storage portion includes information of entire reproduction time of the disk, title of the disk, number of audio data pieces (i.e., number of music pieces), reproduction time of each audio data, titles of disk and each audio data, artist names of disk and each audio data, category name of each audio data, and the like management information relating to the main data.

The following describes an operation in the case of reading or writing the auxiliary information of such as attributive information of the audio data recorded on the optical disk 107 through the external equipment via the digital interface 108. In this reading or writing operation of the auxiliary information of the attributive information, the auxiliary information is developed in a list structure so that the list of the auxiliary information is accessed to be read or written, thereby obtaining the desired information contents.

In the first step, in the case where the data sender/receiver 105 of the apparatus 100 receives a command data packet for reading the attributive information of the audio data recorded on the optical disk 107 through the external equipment via the digital interface 108, the data sender/receiver 105 of the apparatus 100 analyzes a header of the packet. Then, the command for reading included in the command packet is extracted and inputted to the system controller 103. Upon receipt of the reading command by the system controller 103, the attributive information held in the attribute storage portion of the auxiliary data storage device 102 is extracted and applied to the list generator 109. Upon receipt of the attributive information by the list generator 109, the attributive information is reversibly converted to develop predetermined attributive information lists by appending a specified ID code to each attributive information list, and then the developed list format of the attributive information is generated to be applied to the system controller 103. The information list is then outputted from the system controller 103 and applied to the data sender/receiver 105 where the list format is made into a packet format by adding a header and the like for setting a destination address. Thus, the resultant information list contained in the packet format is transmitted to the external equipment via the digital interface 108.

Next, the following describes a method of writing attributive information using a write command including an ID code of the desired attributive information. When the write command is transmitted to the apparatus 100 from an external equipment, the data sender/receiver 105 of the apparatus 100 analyzes a header of the command packet, and then the write command included in the packet is extracted and inputted to the system controller 103. Upon receipt of the write command by the system controller 103, the content of the write command is conducted to the attributive information list held in the list generator unit 109. Then, the write command is also executed to the attributive information held in the auxiliary data storage device 102. The resultant attributive information after subjecting to the write command execution is read out by the system controller 103 and recorded on the optical disk 107 via the recording/reproduction signal processor unit 101 at the same time or when the optical disk is later ejected from the apparatus 100 or the like.

Fig. 2 shows an example of the entire structure of the attributive information lists developed by the list generator unit 109, which includes a contents list 201, title list 202 and artist list 203. In this example, audio data of e.g. three pieces of music A, B and C is recorded on the optical disk 107. As a pointer 200 to the contents list, a predetermined ID code designating the contents list 201 is assigned for accessing thereto. The contents list 201 includes information of: total reproduction time of entire disk; pointer 210 to title list; pointer 211 to artist list; number of music pieces 212; and reproduction times (213, 214, 215) of music A, B and C.

Regarding the pointer information included in the contents list 201, the ID code assigned to the title list 202 is written serving as the pointer 210 to the title list, and ID code assigned to the artist list 203 is written serving as the pointer 211 to the artist list. It is noted here that, when a plurality of contents lists are developed by the list generator unit 109, each attributive text data list of the title list 202 and artist list 203 may also includes pointer information of an ID code assigned to a corresponding contents list.

The title list 202 is a text database list which includes information of: title of entire disk 220; number of music pieces 221; and titles (222, 223, 224) of music A, B and C. Each title of music has a data structure which is comprised of a character code using e.g. 7 bits per one character, language code, text data, and ID codes assigned to the above items. In this construction of the title list 202, the order in arrangement of the titles of the music pieces is the same as that of the music pieces A, B and C written in the contents list 201.

Similarly, the artist list 203 includes information of: artist name of entire disk 230; number of music pieces 231; and artist names (232, 233, 234) of music A, B and C. In this construction of the artist list 203, the order in arrangement of the artist names of the music pieces is the same as that of the music pieces A, B and C written in the contents list 201.

The following describes an operation in the case of reading out a title of e.g. a first piece of music A recorded on the optical disk 107 through the external equipment via the digital interface 108. In the same manner as the method of reading the attributive information as described above, the external equipment firstly reads out the pointer 200 to contents list, and then reads out the pointer 210 to title list from the contents list 201 using the pointer 200. Upon receipt of the pointer 210, the external equipment reads out the title 222 of the first music included in the title list 202. In this operation, since the order of the titles in arrangement in the title list is the same as that of the music pieces A, B and C arranged in the contents list 201, therefore the desired title of music A can be obtained by accessing to the title 222 of the first music piece contained in the title list 202.

Thereafter, when the title of the third music C is to be read out, since the ID of the title list 202 has been already read out as the pointer 210 to the title list, therefore it is not necessary to read out the contents list 201 again at this time. That is, the desired title of music C can be obtained by directly reading out the title 224 of the third music piece included in the title list 202.

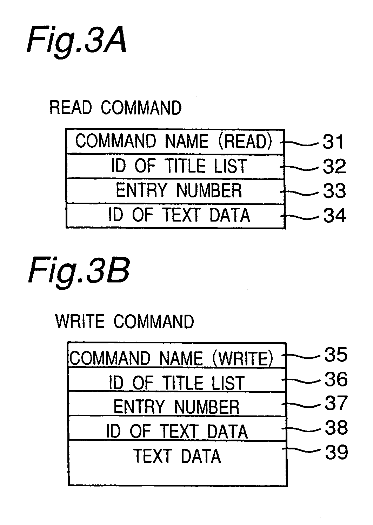

Fig. 3A shows a data structure of READ command for reading e.g. a title of music, which includes fields of: command name (READ) 31, ID of a list to be accessed 32 (ID of title list in this case), entry number 33 of music (attributive text data) to be accessed, and ID indicative of text data 34. When the title of the third music piece C is desired to be read out, the entry number of music is "3". A response to the READ command is produced using the obtained title, and the data structure of the response is formed by appending the read-out attributive text data to the command.

In IEC 61883 Standard, the packet structure of READ command has a command name field represented as "READ INFO BLOCK" and a target address to be read out is represented as "info_block_reference_path". In the case of reading out, for example, a title of the third music included in the text database list, the READ command includes the ID of the title list 202, ID indicative of the third music data and ID indicative of title text data. The structure of the response is formed by appending the obtained text data to the command structure.

Next, the following describes an operation in the case of writing e.g. an artist name (230) of disk recorded on the optical disk 107, through the external equipment via the digital interface 108. In the same manner as the method of reading the attributive information as described above, the external equipment firstly reads out the pointer 200 to contents list, and then reads out the pointer 211 to artist list from the contents list 201 using the pointer 200. Upon receipt of the pointer 211, the external equipment accesses to the region (230) indicative of the artist name of the disk written in the artist list 203 and writes the desired artist name in the region (230). This write operation of attributive information is executed in the same manner as the write operation descried before.

Thereafter, when e.g. the artist name of music B is to be written in the list, since the ID of the artist list 203 has been already read out as the pointer 211 to the artist list, therefore it is not necessary to read out the contents list 201 again. That is, the desired artist name of music B can be obtained by directly accessing to the position (233) indicative of the artist name of the second music B included in the artist list 203.

Fig. 3B shows a data structure of WRITE command for writing e.g. a title of music, which includes fields of: command name (WRITE) 35, ID of a list to be accessed 36 (ID of title list in this case), entry number 37 of music (attributive text data) to be accessed, ID indicative of text data 38, and attributive text data 39 to be written. When the title of the second music piece is desired to be written, the entry number of music is "2" and a predetermined code number is assigned to the ID of the attributive text data.

In IEC 61883 Standard, the packet structure of WRITE command has a command name field represented as "WRITE INFO BLOCK" and a target address for writing is represented as "info_block_reference_path". In the case of writing, for example, in a position of a title of the third music included in the text database list, the WRITE command includes the ID of the title list 202, ID indicative of the third music data and ID indicative of title text data, so that the text data to be written is written in the field represented as "replacement_info block_data". When attributive text data is written, the desired content of the text data is written in a format of e.g. ASCII data series. A response to the command has a packet structure removing the written text data written in the field "replacement_info_block_data" from the command structure, and "OK" or "NG" is written in a response field included in a senior header in this construction.

As described above, the command data adapted in the present embodiment is effective for the data transmission system of the present invention, and when the command data is for accessing to an ID code assigned to an attributive information list, the command includes a command name field (31, 35) indicative of the command content item and an ID-code field (32, 36) indicating an ID code number of the desired attributive information list to be accessed and a field indicative of an order in arrangement of the attributive information contents in the list, whereby the desired auxiliary information content is identified in address position in the list and obtained by accessing.

As described above, according to the present invention, when the attributive text data lists such as title and artist lists (202, 203) are produced, the order in arrangement of the attributive text data in each of the lists is in the same order in arrangement of the contents (i.e., reproduction times of musics A, B and C in this example) in the contents list (201), where the ID codes of the attributive text data lists are written as the pointer information (210, 211) in the contents list. Therefore, once an ID code of an attributive text data list is read out from the contents list, thereafter a desired text data content of the attributive information can be obtained by directly accessing to the corresponding text data list without reading out the contents list again. This is because the order in arrangement of the attributive text data pieces in the attributive text data lists (202, 203) is in the same order in arrangement of the contents written in the contents list (201). Thus, it is not necessary to read out the contents list every time the attributive text data is read or written, which remarkably reduces the data processing amount.

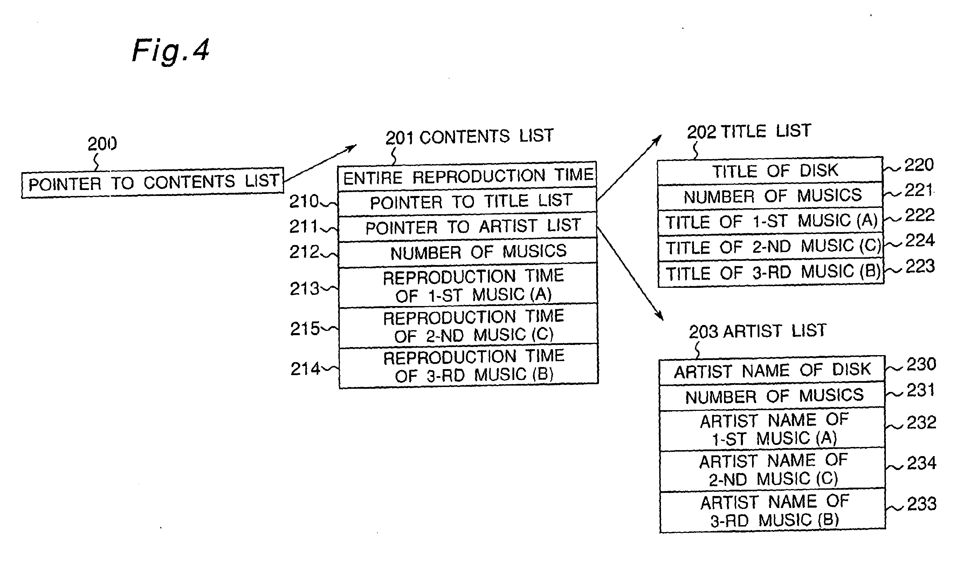

Next, the following describes an operation in the case of exchanging the orders in arrangement of music pieces in the attributive information lists (201, 202, 203) with reference to Figs. 2 and 4. In this order exchanging operation, the means for temporarily absorbing and holding the contents of each list is accomplished with use of the list storage memory device 110 under the control of the system controller 103. In the case where e.g. the music B and music C are taken turn in arrangement order, firstly in the construction shown in Fig. 2, the orders in arrangement of the reproduction time of music B (214) and the reproduction time of music C (215) are exchanged to each other in the contents list 201. Then, the orders in arrangement of the music title B (223) and music title C (224) are similarly exchanged in the title list 202, and also the orders in arrangement of the artist names of music B (233) and music C (234) are similarly exchanged in the artist list 203.

The resultant arrangement of the entire lists after exchanging the orders of data pieces is shown in Fig. 4. By this arrangement, even in the case where the orders in arrangement of music pieces in each list, it can be assured that the orders in arrangement of the music pieces in each of the title and artist lists are made coincident with the order in arrangement thereof in the contents list. Based on the above exchanged order of the contents, the order of the corresponding attributive information recorded on the optical disk is also exchanged, for example, when the optical disk is ejected from the apparatus. It is noted here that the list storage memory device 110 may be included in the list generator unit 109.

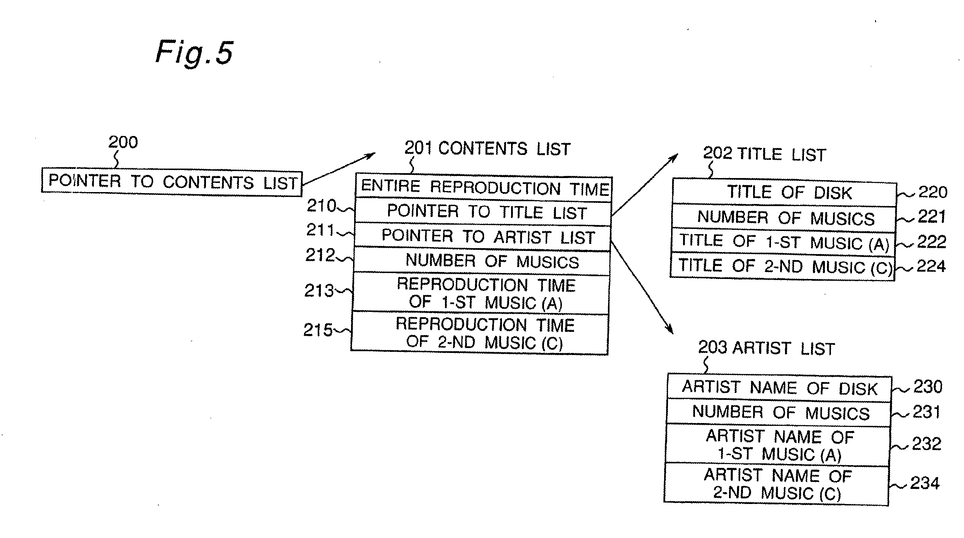

Next, the following describes an operation in the case of deleting an attributive music data piece in each of the lists (201, 202, 203) with reference to Fig. 5. In the case where e.g. attributive contents of music piece B is to be deleted, firstly, in the construction shown in Fig. 2, the reproduction time of music B (214) is deleted in the contents list 201, and then the title of music B (223) is deleted in the title list, and similarly the artist name of music B (233) is also deleted in the artist list 203. As a result of deletion, the arrangement of the entire lists is as shown in Fig. 5.

By this operation, even when an attributive music data piece is deleted, it is assured that the order in arrangement of the attributive text data pieces in each of the title and artist lists can be made coincident with the order in arrangement thereof in the contents list. Based on the deletion result, the attributive information of music B recorded on the optical disk is also deleted, for example, when the disk is ejected from the apparatus.

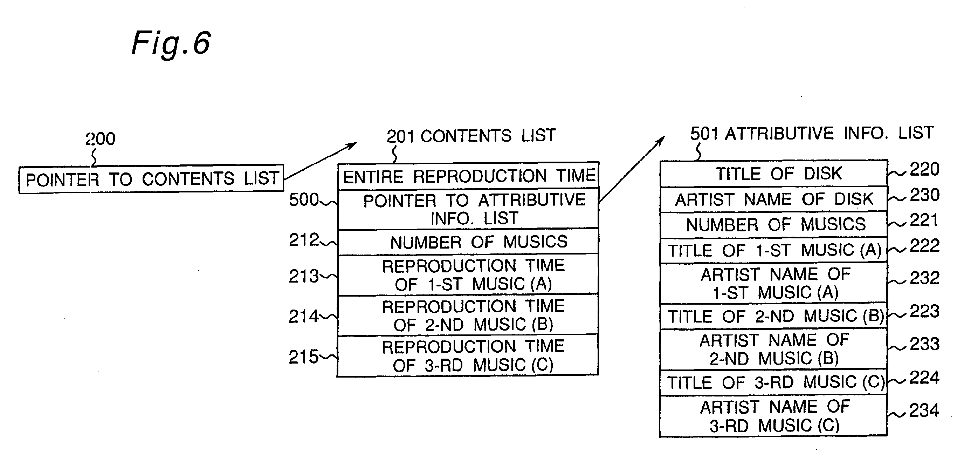

In this embodiment, it is noted that, although the title list and artist list are formed in separate construction as an example of locating the attributive text data lists, these text data lists may be combined as one list, which an example of one integrated list 501 is shown in Fig. 6. In this construction, two pieces of the pointer information (210, 211) shown in Fig. 2 are also integrated as one piece of pointer information (500) in Fig. 6. This integration of the attributive information lists can be made even when the number of the attributive information lists is increased.

### (SECOND EMBODIMENT)

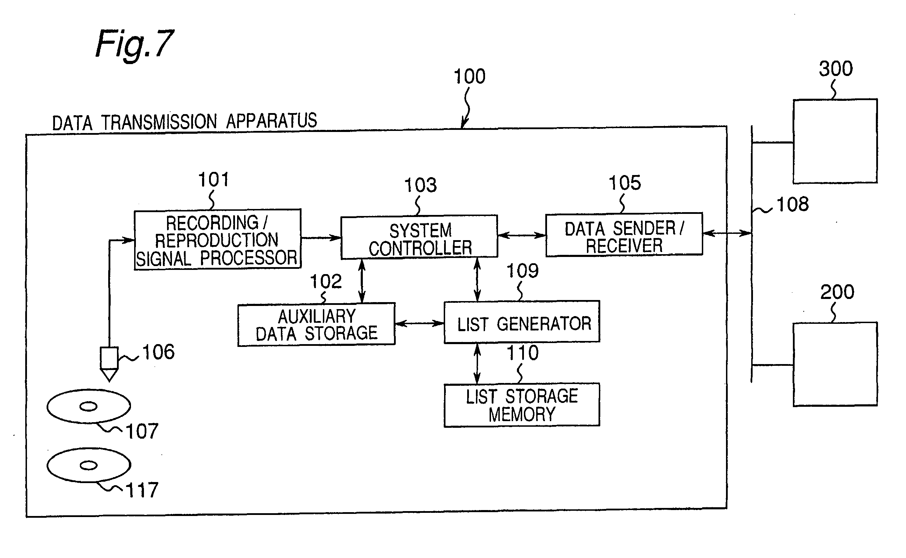

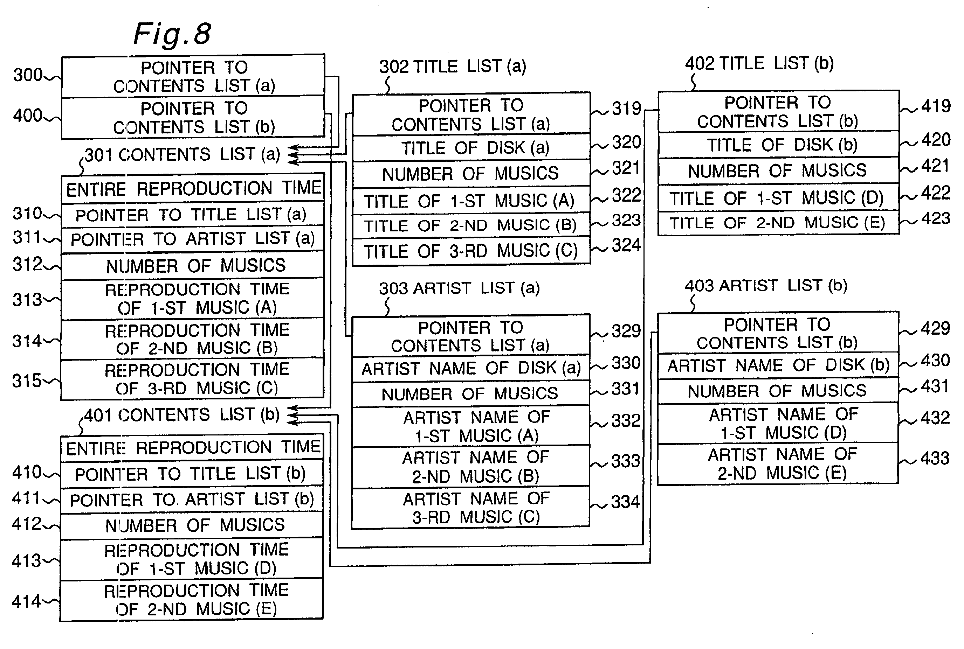

Next, the following describes a second embodiment of the data transmission system of the present invention with reference to Figs. 7 and 8.

Fig. 7 shows a schematic construction of the second embodiment of the data transmission system, where a different point in feature from the first embodiment shown in Fig. 1 resides in the fact that, a second optical disk b (117) is further provided in addition to the first optical disk a (107) in the data transmission apparatus 100 and any one of the optical disks 107 and 117 is selectively used by means of a changeover mechanism (not shown) for subjecting to recording/reproduction process. The other essential construction thereof is the same as the first embodiment, and therefore the explanation of the same construction is not made for brevity.

In this embodiment, it is assumed that the auxiliary data storage device 102 stores both the attributive management information recorded on the first and second optical disks 107 and 117. Thus, the external equipment can access to both the attributive information recorded on the first and second optical disks 107 and 117. The method of accessing to the attributive information is the same as that of the first embodiment.

In this construction, Fig. 8 shows an arrangement of the entire attributive information lists produced by the list generator unit 109, which includes a contents list a (301), title list a (302) and artist list a (303) in connection with the first optical disk a (107) and further includes a contents list b (401), title list b (402) and artist list b (403) in connection with the second optical disk b (117). It is assumed here that three pieces of audio data of music A, B and C are recorded on the first optical disk a (107) and two pieces of audio data of music D and E are recorded on the second optical disk b (117).

The contents list a (301) includes attributive information of: total reproduction time of the first disk a; pointer (310) to the title list a; pointer (311) to the artist list a; number of music pieces (312); and reproduction times of music A, B and C (313, 314, 315). The contents list b (401) includes attributive information of: total reproduction time of the second disk b; pointer (410) to the title list b; pointer (411) to the artist list b; number of music pieces (412); and reproduction times of music D and E (413, 414).

An ID code of the title list a (302) is written as the pointer (310) to the title list a and an ID code of the artist list a (303) is written as the pointer (311) to the artist list a. Similarly, an ID code of the title list b (402) is written as the pointer (410) to the title list b and an ID code of the artist list b (403) is written as the pointer (411) to the artist list b.

The title list a (302) includes attributive text data information of: pointer (319) to the contents list a; title of disk a (320); number of music pieces (321); and titles of music A, B and C (322, 323, 324) written therein. In this construction, an ID code of the contents list a (301) is written as the pointer (319) to the contents list a while the order in arrangement of titles written in the title list a (302) is in the same order in arrangement of music pieces written in the contents list a (301).

Similarly, the artist list a (303) includes attributive text data information of: pointer (329) to the contents list a; artist name (330) of the disk a; number of music pieces (331); and artist names of music A, B and C (332, 333, 334) written therein. In this construction, an ID code of the contents list a (301) is written as the pointer (329) to the contents list a while the order in arrangement of artist names written in the artist list a (303) is in the same order in arrangement of music pieces written in the contents list a (301).

The structures of the contents list b (401), title list b (402) and artist list b (403) in connection with the second optical disk b (117) are similar to those of the contents list a (301), title list a (302) and artist list a (303) in connection with the first optical disk a (107).

The method of reading or writing attributive text data information of titles and artist names via the digital interface 108 is the same as that of the first embodiment.

The following describes an operation in the case of searching the title list a (302) and title list b (402) to selectively extract a music piece having a title including a specific character string. In this case, the external equipment first reads out the title list a (302) and title list b (402) via the digital interface 108, and then searches the desired character string in the readout title lists to detect the title including the desired character string. For example, in the case where the title including the desired character string is the title (422) of music D, it is confirmed that the contents list b (401) is selected as contains the attributive information of music D with reference to the pointer (419) to the contents list b included in the readout title list b (402). Also, it is confirmed that the order in arrangement of the music D is the first music in the contents list b (401), and thus the desired music D can be selected.

In the second embodiment, although the explanation is made in the case of providing two optical disks in the apparatus, any number of plural optical disks may be provided in the apparatus. Moreover, although a plurality of contents lists (301, 401) are provided with use of the changer mechanism, the contents list may have a stair layer structure. Even when a single contents list is provided, each of the attributive text data lists may includes pointer information written therein for designating the contents list relating to the attributive text data.

As described above, according to the present invention, in the case where the attributive text data lists of such as titles and artist names are constructed, the order in arrangement of the attributive text data such as music pieces in each of the attributive text data lists is made coincident with the order of the attributive contents arranged in the contents list where the contents list includes an ID code of each attributive text data list as pointer information thereto.

Moreover, each of the attributive text data lists may include an ID code of the contents list as the pointer information for accessing thereto corresponding to each of the attributive text data. Therefore, once an ID code of an attributive text data list is read out from the contents list, the desired attributive text data can be read or written by directly accessing to the attributive text data list thereafter. This is because the order in arrangement of the attributive contents written in the contents list is made coincident with the order in arrangement of the corresponding text data contents written in each of the attributive text data lists.

By this arrangement, it is not necessary to read out the contents list every time the attributive text data is read or written, whereby data processing amount can be reduced. Moreover, in the case where a character string is searched in the attributive text data lists and the desired attributive text data information corresponding to the search is found out, the contents list including the contents of the desired attributive text data can be easily confirmed. This is because each of the attributive text data lists includes ID code of the contents list corresponding to the attributive text data list and because the order in arrangement of the contents written in the contents list is made coincident with the order in arrangement of the attributive text data pieces written in the attributive text data lists.

It is noted that, although an optical disk is used as a recording medium in the embodiments, it is not limited to this and other data recording medium such as magnetic disk, magnetic recording tape and the like can be used so long as the medium may record the data management or attributive information.

Also, in the embodiments, although audio data is treated as the substantive main data, video data and other still image data can be utilized.

Moreover, in this embodiments, although the attributive information held in the auxiliary data storage portion 102 are converted to a list pattern format by means of the list generator 109, the attributive information can be stored in a list pattern format in the auxiliary data storage portion 102 including the function of the list generator 109.

Moreover, in the present embodiments, although the examples of the lists of the attributive information are shown by text data information such as titles and artist names as illustrated in Figs 2 and 8, other items can be included in the lists, for example, writer and composer names, icon data and the like as the attributes.

Moreover, in the present invention, although the title list and artist list are formed in separation as an example of constructing the attributive text data lists, these lists may be integrated as a single list, and this may be available even when the number of attributive text data lists is increased.

Moreover, in the present embodiments, although the information of reproduction times of audio data pieces are listed in the contents list for specifying the order of the audio data pieces arranged in the list, other items such as a remainder amount of a disk may be written therefor.

Moreover, in the present embodiment, the command data structure is not limited to those shown Figs. 5A and 5C. When reading or writing attributive information using a command, it is not limited to one piece of attributive information in one operation, and a plural pieces of attributive information can be simultaneously read or written by describing a plurality of ID codes in one command.

Moreover, in the present invention, although the attributive information is used as the auxiliary information to be accessed by the external equipment, it is not limited to these information and other auxiliary information can be utilized so long as the information can be accessed from the external equipment to the data transmission apparatus.

As described above, according to the present invention, in the case where the attributive text data lists of such as titles and artist names are constructed, the order in arrangement of the attributive text data such as music pieces in each of the attributive text data lists is made coincident with the order of the attributive contents arranged in the contents list where the contents list includes an ID code of each attributive text data list as pointer information thereto.

Moreover, each of the attributive text data lists may include an ID code of the contents list as the pointer information for accessing thereto corresponding to each of the attributive text data. Therefore, once an ID code of an attributive text data list is read out from the contents list, the desired attributive text data can be read or written by directly accessing to the attributive text data list thereafter. This is because the order in arrangement of the attributive contents written in the contents list is made coincident with the order in arrangement of the corresponding text data contents written in each of the attributive text data lists.

By this arrangement, it is not necessary to read out the contents list every time the attributive text data is read or written, whereby data processing amount can be reduced. Moreover, in the case where a character string is searched in the attributive text data lists and the desired attributive text data information corresponding to the search is found out, the contents list including the contents corresponding to the desired attributive text data can be easily confirmed. This is because each of the attributive text data lists includes ID code of the contents list corresponding to the attributive text data list and because the order in arrangement of the contents written in the contents list is made coincident with the order in arrangement of the attributive text data pieces written in the attributive text data lists. Thus, the data processing amount of the apparatus and the external equipment can be reduced together with reduction of the traffic amount on the digital interface.

## Claims

1. A data transmission apparatus (100) for exchanging with an external equipment (200) auxiliary information, relating to main data comprising main data items, the auxiliary information and the main data both recorded on a recording medium (107), based on command data received from the external equipment (200) via a digital interface (108), said apparatus comprising:
a'recording/reproduction unit (101) operable to record and reproduce data to and from a recording medium (107);
an auxiliary information storage unit (102) operable to store the auxiliary information data reproduced from said recording medium (107); and
a list development unit (109) operable to develop auxiliary information lists (201, 202, 203) of the auxiliary information data read out from said auxiliary information storage unit (102), wherein one of said auxiliary information lists (201, 202 203) is
a contents list (201) containing items (213, 214, 215) attributes of main data and
at least one other one of said auxiliary information lists is a text data list (202, 203) containing text attributes of main data items (222, 223, 224; 232, 233, 234) ;
wherein the auxiliary information lists (201, 202, 203) are ordered such that in each of the respective auxiliary information lists (201, 202, 203) relative positions of auxiliary information relating to a main data item are the same;
wherein each auxiliary information list (201, 202, 203) has a specified list ID code identifying that list, and the content list (201) further comprises the specified list ID code of each of said at least one text data lists (202, 203);
wherein the command data include a list ID code field (32, 36) indicating a list ID code of a desired text data and an entry number field (33, 37) indicating a desired position in the desired text data list.

2. The apparatus as claimed in claim 1, wherein each of the text data list (302, 303; 402, 403) includes pointer information of an ID code (319, 329; 419, 429) assigned to the contents list (301, 401) relating to the text data list.

3. The apparatus as claimed in claim 1 further comprising a data sender and receiver means (105) for sending and receiving the auxiliary information data in a packet format to and from the external equipment via the digital interface (108).

4. The apparatus as claimed in claim 1, wherein any of audio, video and still image data is treated as the main data.

5. The apparatus as claimed in claim 1 further comprising a list storage memory means (110) for temporarily absorbing and storing the auxiliary information contents included in each of the auxiliary information lists (201, 202, 203) for use in exchanging an order in arrangement of the auxiliary information contents in each of the lists.

6. The apparatus as claimed in claim 5, wherein when the positions of the auxiliary information contents are exchanged in the auxiliary information lists (201, 202, 203), the positions in arrangement of the contents are exchanged in the contents list (201), and then the positions in arrangement of the corresponding text data pieces are similarly exchanged in each of the text data list (202, 203).

7. The apparatus as claimed in claim 1, wherein in the case of deleting an auxiliary information content in each of the auxiliary information lists (201, 202, 203), the desired auxiliary content is deleted in the contents list (201), and then the corresponding text data content is deleted in each of the text data list (202, 203).

8. A data transmission method for exchanging with an external equipment (200) auxiliary information relating to main data comprising main data items, the auxiliary information and the main data both recorded on a recording medium (107), based on command data received from the external equipment (200) via a digital interface (108), said method comprising the steps of:
storing the auxiliary information data reproduced from said recording medium (107) by a recording/reproduction unit (101) operable to record and reproduce data to and from a recording medium (107); and
reading and developing auxiliary information lists (201, 202, 203) of the auxiliary information data, wherein one of said auxiliary information lists (201, 202, 203) is
a contents list (201) containing attributes of main data items (213, 214, 215) and
at least one other one of said auxiliary information lists is a text data list (202, 203) containing text attributes of main data items (222, 223, 224; 232, 233, 234);
wherein the auxiliary information list (201, 202, 203) are ordered such that in each of the respective auxiliary information lists (201, 202, 203) relative positions of auxiliary information relating to a main data item are the same;
wherein each auxiliary information lists (201, 202, 203) has a specified list ID code identifying that list, and the contents list (201) further comprises the specified list ID code of each of said at least one text data list (202, 203);
wherein the command data includes a list ID code field (32, 36) indicating a list ID code of a desired text data and an entry number field (33, 37) indicating a desired position in the desired text data list.

9. The method as claimed in claim 8, wherein each of the text data list (302, 303; 402, 403) includes pointer information of an ID code (319, 329; 419, 429) assigned to the contents list (301, 401) relating to the text data list.

10. The method as claimed in claim 8 further comprising the step of sending and receiving the auxiliary information data in a packet format to and from the external equipment via the digital interface (108).

11. The method as claimed in claim 8 further comprising the step of temporarily absorbing and storing the auxiliary information contents included in each of the auxiliary information lists (201, 202, 203) for use in exchanging an order in arrangement of the auxiliary information contents in each of the lists.

12. The method as claimed in claim 11, wherein when the positions of the auxiliary information contents are exchanged in the auxiliary information lists (201, 202, 203), the positions in arrangement of the contents are exchanged in the contents list (201), and then the positions in arrangement of the corresponding text data pieces are similarly exchanged in each of the text data list (202, 203).

13. The method as claimed in claim 8, wherein in the case of deleting an auxiliary information content in each of the auxiliary information lists (201, 202, 203), the desired auxiliary content is deleted in the contents list (201), and then the corresponding text data content is deleted in each of the text data list (202, 203).

## Patentansprüche

1. Datenübermittlungsvorrichtung (100) zum Austauschen von Hilfsinformation, die sich auf Hauptdaten bezieht, die Hauptdatenelemente umfassen, mit einer externen Ausrüstung (200), wobei die Hilfsinformation und die Hauptdaten beide in einem Aufzeichnungsmedium (107) aufgezeichnet sind, auf Basis von Befehlsdaten, die über eine digitale Schnittstelle (108) von der externen Ausrüstung (200) empfangen wurden, wobei die Vorrichtung umfasst:
eine Aufzeichnungs-/Wiedergabeeinheit (101), die ausgestaltet ist, Daten in einem Aufzeichnungsmedium (107) aufzuzeichnen und Daten davon wiederzugeben,
eine Hilfsinformationsspeichereinheit (102), die ausgestaltet ist, die Hilfsinformationsdaten zu speichern, die von dem Aufzeichnungsmedium (107) wiedergegeben wurden, und
eine Listenentwicklungseinheit (109), die ausgestaltet ist, Hilfsinformationslisten (201, 202, 203) der Hilfsinformationsdaten zu entwickeln, die aus der Hilfsinformationsspeichereinheit (102) ausgelesen sind, wobei eine der Hilfsinformationslisten (201, 202, 203) eine Inhalteliste (201) mit Attributen von Hauptdatenelementen (213, 214, 215) ist und wenigstens eine andere der Hilfsinformationslisten eine Textdatenliste (202, 203) mit Textattributen von Hauptdatenelementen (222, 223, 224, 232, 233, 234) ist,
wobei die Hilfsinformationslisten (201, 202, 203) derart geordnet sind, dass in jeder der jeweiligen Hilfsinformationslisten (201, 202, 203) relative Positionen von Hilfsinformation mit Bezug auf ein Hauptdatenelement die gleichen sind,
wobei jede Hilfsinformationsliste (201, 202, 203) einen spezifizierten Listen-ID-Kode aufweist, der diese Liste identifiziert, und die Inhalteliste (201) ferner den spezifizierten Listen-ID-Kode von jeder der wenigstens einen Textdatenliste (202, 203) umfasst,
wobei die Befehlsdaten ein Listen-ID-Kode-Feld (32, 36), das einen Listen-ID-Kode eines gewünschten Textdatums angibt, und ein Eintragsnummernfeld (33, 37) aufweisen, das eine gewünschte Position in der gewünschten Textdatenliste angibt.

2. Vorrichtung nach Anspruch 1, wobei
jede der Textdatenlisten (302, 303, 402, 403) Pointer-Information eines ID-Kodes (319, 329, 419. 429) umfasst, der der Inhalteliste (301, 401) zugewiesen ist, die mit der Textdatenliste in Beziehung steht.

3. Vorrichtung nach Anspruch 1,
ferner mit einem Datensende- und -empfangsmittel (105) zum Senden und Empfangen der Hilfsinformationsdaten in einem Paketformat von und zu der externen Ausrüstung über die digitale Schnittstelle (108).

4. Vorrichtung nach Anspruch 1,
wobei Audio-, Video- und/oder Standbilddaten als die Hauptdaten behandelt werden.

5. Vorrichtung nach Anspruch 1,
ferner mit einem Listenspeicherspeichermittel (110) zum temporären Absorbieren und Speichern der Hilfsinformationsinhalte, die in jeder der Hilfsinformationslisten (201, 202, 203) enthalten sind, zur Verwendung in einem Austausch einer Reihenfolge in einer Anordnung der Hilfsinformationslisten in jeder der Listen.

6. Vorrichtung nach Anspruch 5,
wobei, wenn die Positionen der Hilfsinformationsinhalte in den Hilfsinformationslisten (201, 202, 203) ausgetauscht werden, die Positionen in der Anordnung der Inhalte in der Inhalteliste (201) ausgetauscht werden und anschließend die Positionen in der Anordnung der entsprechenden Textdatenstücke in ähnlicher Weise in jeder der Textdatenlisten (202, 203) ausgetauscht werden.

7. Vorrichtung nach Anspruch 1,
wobei, in dem Fall des Löschens eines Hilfsinformationsinhalts in einer jeden der Hilfsinformationslisten (201, 202, 203), der gewünschte Hilfsinhalt in der Inhalteliste (201) gelöscht wird und anschließend der entsprechende Textdateninhalt in jeder der Textdatenlisten (202, 203) gelöscht wird.

8. Datenübermittlungsverfahren zum Austauschen von Hilfsinformation, die sich auf Hauptdaten bezieht, die Hauptdatenelemente enthalten, mit einer externen Ausrüstung (200), wobei die Hilfsinformation und die Hauptdaten beide in einem Aufzeichnungsmedium (207) gespeichert sind, auf Basis von Befehlsdaten, die über eine digitale Schnittstelle (108) von der externen Ausrüstung (200) empfangen wurden, wobei das Verfahren die Schritte aufweist.
Speichern der Hilfsinformationsdaten, die von dem Aufzeichnungsmedium (107) durch eine Aufzeichnungs-/Wiedergabeeinheit (101) wiedergegeben wurden, die dazu ausgestaltet ist, Daten in einem Aufzeichnungsmedium (107) aufzuzeichnen und von einem solchen wiederzugeben, und
Lesen und Entwickeln von Hilfsinformationslisten (201, 202, 203) der Hilfsinformationsdaten, wobei eine der Hilfsinformationslisten (201, 202, 203) eine Inhalteliste (201) ist, die Attribute von Hauptdatenelementen (213, 214, 215) enthält, und
wenigstens eine der anderen Hilfsinformationslisten eine Textdatenliste (202, 203) ist, die Textattribute von Hauptdatenelementen (222, 223, 224, 232, 233, 234) enthält,
wobei die Hilfsinformationslisten (201, 202. 203) derart geordnet sind, dass in jeder der jeweiligen Hilfsinformationslisten (201, 202, 203) relative Positionen von Hilfsinformation mit Bezug auf ein Hauptdatenelement die gleichen sind,
wobei jede Hilfsinformationsliste (201, 202, 203) einen spezifizierten Listen-ID-Kode aufweist, der diese Liste identifiziert, und die Inhalteliste (201) ferner den spezifizierten Listen-ID-Kode von jeder der wenigstens einen Textdatenliste (202, 203) aufweist,
wobei die Befehlsdaten ein Listen-ID-Kode-Feld (32, 36), das einen Listen-ID-Kode eines gewünschten Textdatums angibt, und ein Eintragsnummernfeld (32, 37) aufweisen, das eine gewünschte Position in der gewünschten Textdatenliste angibt.

9. Verfahren nach Anspruch 8,
wobei jede der Textdatenliste (302, 303, 403) Pointer-Information eines ID-Kodes (319, 329, 419, 429) aufweist, der der Inhalteliste (301, 401) zugewiesen ist, die mit der Textdatenliste in Beziehung steht.

10. Verfahren nach Anspruch 8,
ferner mit dem Schritt des Sendens und Empfangens der Hilfsinformationsdaten in einem Paketformat an und von der externen Ausrüstung über die digitale Schnittstelle (108).

11. Verfahren nach Anspruch 8,
ferner mit dem Schritt des temporären Absorbierens und Speicherns der Hilfsinformationsinhalte, die in jeder der Hilfsinformationslisten (201, 202, 203) enthalten sind, zur Verwendung im Austauschen einer Reihenfolge einer Anordnung der Hilfsinformationsinhalte in jeder der Listen.

12. Verfahren nach Anspruch 11,
wobei, wenn die Positionen der Hilfsinformationsinhalte in den Hilfsinformationslisten (201, 202, 203) ausgetauscht werden, die Positionen in einer Anordnung der Inhalte in der Inhalteliste (201) ausgetauscht werden und anschließend die Positionen in einer Anordnung der entsprechenden Textdatenstücke in ähnlicher Weise in jeder der Textdatenliste (202, 203) ausgetauscht werden.

13. Verfahren nach Anspruch 8,
wobei, in dem Fall des Löschens eines Hilfsinformationsinhaltes in einer jeden der Hilfsinformationslisten (201, 202, 203), der gewünschte Hilfsinhalt in der Inhalteliste (201) gelöscht wird und anschließend der entsprechende Textdateninhalt in einer jeden der Textdatenlisten (202, 203) gelöscht wird.

## Revendications

1. Appareil de transmission de données (100) pour échanger avec un équipement externe (200) des informations auxiliaires se rapportant à des données principales comprenant des éléments de données principales, les informations auxiliaires et les données principales sont enregistrées sur un support d'enregistrement (107), selon des données de commande reçues de l'équipement externe (200) par le biais d'une interface numérique (108) ledit appareil comprenant:
une unité d'enregistrement/de reproduction (101) pouvant fonctionner pour enregistrer et reproduire des données sur et à partir d'un support d'enregistrement (107);
une unité (102) de stockage d'informations auxiliaires pouvant fonctionner pour stocker les données d'informations auxiliaires reproduites à partir dudit support d'enregistrement (107); et
une unité (109) de développement de liste pouvant fonctionner pour développer des listes (201, 202, 203) d'informations auxiliaires des données d'informations auxiliaires lues de ladite unité (102) de stockage d'informations auxiliaires, où l'une desdites listes (201, 202, 203) d'informations auxiliaires est
une liste (201) de contenu contenant des attributs d'éléments de données principales (213, 214, 215) et
au moins une autre desdites listes d'informations auxiliaires est une liste (202, 203) de données textuelles contenant des attributs textuels d'éléments de données principales (222, 223, 224; 232, 233, 234);
où les listes (201, 202, 203) d'informations auxiliaires sont ordonnées de sorte que dans chacune des listes (201, 202, 203) d'informations auxiliaires respectives des positions relatives d'informations auxiliaires se rapportant à un élément de données principales soient les mêmes;
où chaque liste (201, 202, 203) d'informations auxiliaires a un code d'identification de liste spécifié identifiant cette liste, et la liste de contenu (201) comprend en outre le code d'identification de liste spécifié de chacune de ladite au moins liste (202, 203) de données textuelles;
où les données de commande comportent un champ (32, 36) de code d'identification de liste indiquant un code d'identification de liste de données textuelles désirées et un champ (33, 37) de numéro d'entrée indiquant une position désirée dans la liste de données textuelles désirées.

2. Appareil tel que revendiqué dans la revendication 1, dans lequel chacune de la liste (302, 303; 402, 403) de données textuelles comporte des informations de pointeur d'un code d'identification (319, 329; 419, 429) attribué à la liste de contenus (301, 401) se rapportant à la liste de données textuelles.

3. Appareil tel que revendiqué dans la revendication 1 comprenant en outre un moyen (105) d'envoi et de réception de données pour envoyer et recevoir les données d'informations auxiliaires selon un format en paquet vers et de l'équipement externe par le biais de l'interface numérique (108).

4. Appareil tel que revendiqué dans la revendication 1, dans lequel l'une quelconque parmi des données d'images vidéo et fixes et de données audio sont traitées comme étant les données principales.

5. Appareil tel que revendiqué dans la revendication 1 comprenant en outre un moyen (110) de mémoire de stockage de liste pour absorber et stocker temporairement les contenus d'informations auxiliaires compris dans chacune des listes (201, 202, 203) d'informations auxiliaires à utiliser pour échanger un ordre dans l'agencement des contenus d'informations auxiliaires dans chacune des listes.

6. Appareil tel que revendiqué dans la revendication 5, dans lequel lorsque les positions des contenus d'informations auxiliaires sont échangées dans les listes (201, 202, 203) d'informations auxiliaires, les positions d'agencement des contenus sont échangées dans la liste (201) de contenus, et ensuite les positions d'agencement des données textuelles correspondantes sont échangées de manière similaire dans chacune des listes (202, 203) de données textuelles.

7. Appareil tel que revendiqué dans la revendication 1, dans lequel dans le cas de la suppression d'un contenu d'informations auxiliaires dans chacune des listes d'informations auxiliaires (201, 202, 203), le contenu auxiliaire désiré est supprimé dans la liste de contenus (201), et ensuite le contenu de données textuelles correspondantes est supprimé dans chacune des listes (202, 203) de données textuelles.

8. Procédé de transmission de données pour échanger avec un équipement externe (200), des informations auxiliaires se rapportant à des données principales comprenant des éléments de données principales, les informations auxiliaires et les données principales sont enregistrées sur un support d'enregistrement (107), selon des données de commande reçues de l'équipement externe (200) par le biais d'une interface numérique (108); ledit procédé comprenant les étapes qui consistent à:
stocker les données d'informations auxiliaires reproduites à partir dudit support d'enregistrement (107) par une unité d'enregistrement/de reproduction (101) pouvant fonctionner pour enregistrer et reproduire des données vers et à partir d'un support d'enregistrement (107); et
lire et développer des listes (201, 202, 203) d'informations auxiliaires des données d'informations auxiliaires, où l'une desdites listes (201, 202, 203) d'informations auxiliaires est
une liste de contenus (201) contenant des attributs d'éléments (213, 214, 215) de données principales et
au moins une autre desdites listes d'informations auxiliaires est une liste (202, 203) de données textuelles contenant des attributs d'éléments (222, 223, 224; 232, 233, 234) de données textuelles principales;
où la liste (201, 202, 203) d'informations auxiliaires sont ordonnées de sorte que dans chacune des listes (201, 202, 203) d'informations auxiliaires respectives des positions relatives d'informations auxiliaires se rapportant à un élément de données principales soient les mêmes;
où chacune des listes (201, 202, 203) d'informations auxiliaires a un code d'identification de liste spécifié identifiant cette liste, et la liste (201) de contenus comprend en outre le code d'identification de liste spécifié de chacune de ladite au moins une liste (202, 203) de données textuelles;
où les données de commande comportent un champ (32, 36) de code d'identification de liste indiquant un code d'identification de liste de données textuelles désirées et un champ (33, 37) de nombre d'entrée indiquant une position désirée dans la liste de données textuelles désirées.

9. Procédé tel que revendiqué dans la revendication 8, dans lequel chacune des listes (302, 303; 402, 403) de données textuelles comporte des informations de pointeur d'un code d'identification (319, 329; 419, 429) attribué à la liste (301, 401) de contenus se rapportant à la liste de données textuelles.

10. Procédé tel que revendiqué dans la revendication 8 comprenant en outre l'étape qui consiste à envoyer et à recevoir les données d'informations auxiliaires selon un format par paquet vers et depuis l'équipement externe par le biais de l'interface numérique (108).

11. Procédé tel que revendiqué dans la revendication 8 comprenant en outre l'étape qui consiste à absorber et à stocker temporairement les contenus d'informations auxiliaires compris dans chacune des listes (201, 202, 203) d'informations auxiliaires à utiliser pour échanger un ordre d'agencement des contenus d'informations auxiliaires dans chacune des listes.

12. Procédé tel que revendiqué dans la revendication 11, dans lequel lorsque les positions des contenus d'informations auxiliaires sont échangées dans les listes 201, 202, 203) d'informations auxiliaires, les positions d'agencement des contenus sont échangées dans la liste (201) de contenus, et ensuite les positions d'agencement des données textuelles correspondantes sont échangées de manière similaire dans chacune des listes (202, 203) de données textuelles.

13. Procédé tel que revendiqué dans la revendication 8, dans lequel dans le cas de la suppression d'un contenu d'informations auxiliaires dans chacune des listes (201, 202, 203) d'informations auxiliaires, le contenu auxiliaire désiré est supprimé dans la liste (201) de contenus, et ensuite le contenu de données textuelles correspondantes est supprimé dans chacune des listes (202, 203) d'informations auxiliaires.
